# EUROPEAN PATENT APPLICATION

(11) **EP 4 825 901 A1**
(43) Date of publication of application: **21.10.2026**
(21) Application number: 24918971.3
(22) Date of filing: 02.12.2024
(51) Int. Cl.: C08J 9/224, C08J 9/33, C08J 9/36, C08J 9/00, C08F 257/02, C08F 212/08

(54) **METHOD FOR MANUFACTURING RECYCLED POLYSTYRENE MICROSEEDS, RECYCLED POLYSTYRENE MICROSEEDS MANUFACTURED THEREBY, AND EXPANDED POLYSTYRENE**

(30) Priority: 16.01.2024 KR 20240006397
(71) Applicant: LG Electronics Inc., Yeongdeungpo-gu Seoul 07336 (KR)
(72) Inventor: JUNG, Kyungho, Seoul 06772 (KR); LEE, Dongwook, Seoul 06772 (KR); LEE, Juchul, Seoul 06772 (KR); KWON, Junhan, Seoul 06772 (KR); LEE, Misun, Seoul 06772 (KR)
(74) Representative: Vossius & Partner Patentanwälte Rechtsanwälte mbB
(86) International application number: PCT/KR2024/019461
(87) International publication number: WO 2025/154944

(57) **Abstract**

The present invention relates to a method for manufacturing recycled polystyrene micro seeds, and recycled polystyrene micro seeds and expanded polystyrene prepared therefrom. More particularly, the present invention can provide recycled expandable polystyrene micro seeds capable of preventing a decrease in molecular weight by mixing an antioxidant during a process of manufacturing polystyrene micro seeds using waste expanded polystyrene, and an object of the present invention is to provide expanded polystyrene having a predetermined level or higher of cushioning performance by using the recycled expandable polystyrene micro seeds manufactured thereby.

## Description

### [Technical Field]

The present invention relates to a method for manufacturing recycled polystyrene micro seeds, and recycled polystyrene micro seeds and expanded polystyrene prepared therefrom. More particularly, the present invention relates to recycled expandable polystyrene micro seeds capable of preventing a decrease in molecular weight by mixing an antioxidant during a process of manufacturing polystyrene micro seeds using waste expanded polystyrene, and to expanded polystyrene having a predetermined level or higher of cushioning performance manufactured using the recycled expandable polystyrene micro seeds.

### [Background Art]

Recently, as environmental regulations have been strengthened, demand for eco-friendly packaging materials for reducing carbon emissions has been continuously growing, and accordingly, interest in making cushioning packaging materials for packaging heavy medium- to large-sized products more eco-friendly has also greatly increased. Among cushioning packaging materials, the most representative one is polystyrene foam manufactured from expanded polystyrene (EPS). Due to its excellent cushioning performance, there is currently no substitute comparable thereto, and thus there is a need to develop related technologies for recycling such recycled expanded polystyrene foam without deterioration of physical properties.

Recycled expanded polystyrene is a cushioning packaging material manufactured by recycling waste expanded polystyrene. Since waste expanded polystyrene, which imposes a high environmental pollution burden, can be recycled and reused as a cushioning material, it can contribute to environmental friendliness.

Representative methods for manufacturing such recycled expanded polystyrene include a melt polymerization method in which waste expanded polystyrene is dissolved in styrene monomer, which is a raw material, and converted into a raw material and then polymerized, and a seed polymerization method in which waste expanded polystyrene is formed into micro seeds, coated with styrene monomer, and then polymerized.

In particular, seed polymerization has an advantage in that, by causing waste expanded polystyrene in particle form to participate in the reaction, viscosity increase during the polymerization reaction is small, thereby enabling uniform synthesis and allowing recycled expanded polystyrene to be manufactured with a high yield and a high recycling rate of 50% or more.

In a process of manufacturing such waste expanded polystyrene micro seeds, expandable polystyrene is subjected to a volume-reduction process for reducing its volume, waste expanded polystyrene pellets are formed by a method such as melt extrusion, and then micro-seeding is performed by pulverizing the pellets by strand cutting or underwater cutting.

In the volume-reduction process, heat or pressure, typically heat at or above the glass transition temperature (Tg), is applied to waste expanded polystyrene to remove pores and thereby reduce its volume. During this process, a decrease in the molecular weight of the polystyrene occurs. In general, when the molecular weight of a polymer decreases, fluidity increases but mechanical strength decreases, and therefore waste expanded polystyrene pellets exhibit deterioration in physical properties compared to virgin polystyrene. As a result, waste expanded polystyrene pellets cannot be reused as cushioning packaging materials and are currently recycled mainly for use as picture frames or construction materials.

In addition, in the process of again applying heat at or above the glass transition temperature (Tg) to the pellets and melting the pellets for micro-seeding, a decrease in the molecular weight of the waste expanded polystyrene occurs again. Accordingly, when the pellets are applied as micro seeds for seed polymerization, there has been a problem in that the physical properties of recycled expanded polystyrene are deteriorated.

Accordingly, in order to recycle waste expanded polystyrene into recycled expanded polystyrene, there is an urgent need for a technology capable of preventing a decrease in molecular weight during the volume-reduction process and the micro-seeding process.

### <Related Prior Art Documents>

- Korean Registered Patent No. 10-086937 (Registration Date: November 12, 2008)
- Korean Patent Publication No. 10-2014-0033936 (Publication Date: March 19, 2014)

### [Disclosure]

### [Technical Problem]

An object of the present invention is to provide a method for manufacturing recycled expandable polystyrene micro seeds having a high molecular weight by mixing an antioxidant in order to prevent a problem in which the molecular weight of polystyrene micro seeds, which are manufactured through volume-reduction and micro-seeding steps of waste expanded polystyrene, decreases during the manufacturing process, and to provide expanded polystyrene having a predetermined level or higher of cushioning performance by using the recycled expandable polystyrene micro seeds manufactured thereby.

However, the technical problems to be achieved by the present invention are not limited to the problems mentioned above, and other problems not mentioned herein will be clearly understood by those skilled in the art from the following description.

### [Technical Solution]

To achieve the above object, the present invention relates to a method for manufacturing recycled polystyrene micro seeds, the method comprising:
a volume-reduction/pelletization step of preparing pellets by extruding an ingot manufactured after a volume-reduction treatment in which heat or pressure is applied to recycled polystyrene foam to reduce a volume thereof; and a micro-seeding step of preparing micro seeds by applying heat to the prepared pellets and cutting and pulverizing the pellets,
wherein an antioxidant is added to at least one of the volume-reduction/pelletization step and the micro-seeding step.

The antioxidant may be a primary antioxidant comprising a phenolic-based or amine-based compound, or a secondary antioxidant comprising a sulfur-based or phosphorus-based compound.

Preferably, the antioxidant added during the volume-reduction/pelletization step may comprise at least a primary antioxidant for removing radicals of polystyrene chains to prevent a decrease in molecular weight, and the antioxidant added during the micro-seeding step may comprise at least a secondary antioxidant for suppressing generation of peroxide to prevent a decrease in molecular weight.

The antioxidant is preferably included in an amount of 0.001 to 1 wt% based on the total mass of the manufactured micro seeds.

Another aspect of the present invention relates to recycled polystyrene micro seeds manufactured according to the above method, characterized by having a weight-average molecular weight (Mw) of 150,000 to 300,000.

Another aspect of the present invention relates to expanded polystyrene foam formed by expanding polystyrene particles having a core-shell structure, the polystyrene particles being manufactured by subjecting recycled polystyrene micro seeds manufactured according to the above method and a styrene monomer to suspension polymerization.

The recycled polystyrene micro seeds forming a core of the polystyrene particles may comprise an antioxidant and may have a weight-average molecular weight (Mw) of 150,000 to 300,000.

In the polystyrene particles, the density of the core may be greater than the density of the shell, and preferably, the density of the core may be 1.2 to 2.0 times the density of the shell.

The expanded polystyrene foam may have a moisture content of 5% or less.

### [Advantageous Effects]

The recycled polystyrene micro seeds manufactured according to the present invention can prevent a decrease in the molecular weight of the micro seeds by adding an antioxidant during the manufacturing step. In addition, expanded polystyrene foam manufactured using the recycled polystyrene micro seeds through a seed polymerization process with styrene monomer has advantages in that it is eco-friendly and has excellent cushioning performance as well as excellent mechanical performance.

Furthermore, in polystyrene particles having a core-shell structure manufactured by seed-polymerizing the recycled polystyrene micro seeds according to the present invention with styrene monomer, the density of the core is higher than the density of the shell. Accordingly, gaps between adjacent particles caused by over-expansion of the shell can be minimized, thereby preventing moisture penetration and significantly reducing moisture content.

### [Description of Drawings]

FIG. 1 is a flowchart illustrating a process of manufacturing recycled polystyrene micro seeds and recycled polystyrene micro particles according to the present invention.
FIG. 2(a) is an image photograph of conventional recycled expandable polystyrene pellets, and FIG. 2(b) is an image photograph of expandable polystyrene micro seeds according to the present invention.
FIG. 3 is a conceptual diagram of polystyrene (EPS) particles having a core-shell structure, which are manufactured by subjecting recycled polystyrene micro seeds according to the present invention and a styrene monomer to suspension polymerization.

### [Mode for Invention]

The specific embodiments described herein represent preferred implementations or examples of the present invention, and the scope of the present invention is not limited thereby. It will be apparent to those skilled in the art that modifications and other uses of the present invention do not depart from the scope of the invention described in the claims of the present specification.

Hereinafter, the present invention will be described in detail with reference to the drawings.

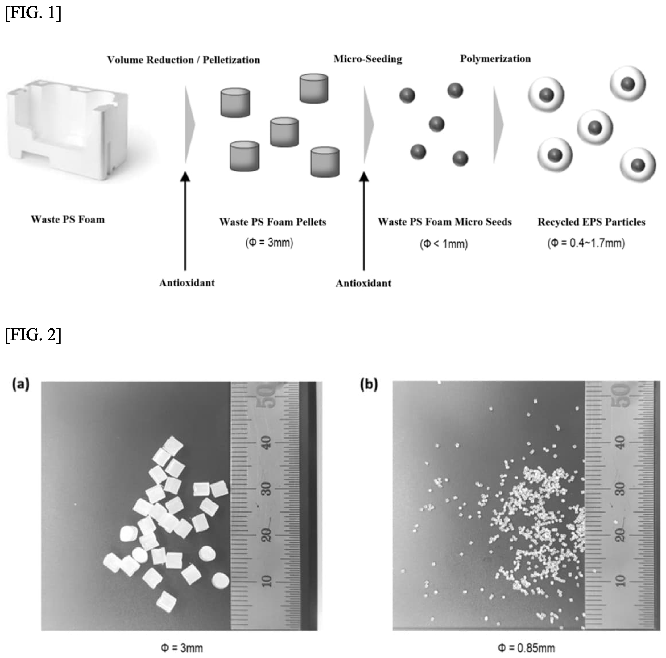

FIG. 1 is a flowchart illustrating a process of manufacturing recycled polystyrene micro seeds and recycled polystyrene micro particles according to the present invention.

First, a method for manufacturing recycled polystyrene micro seeds according to the present invention will be described step by step.

### 1) Preparation of Waste Expanded Polystyrene

The waste expanded polystyrene may be selected from home appliance packaging materials, construction packaging materials and insulation materials, food packaging materials, and the like. However, it is preferable to use home appliance packaging materials, in which contaminants are minimized during distribution.

### 2) Volume-Reduction/Pelletization Step

In this step, heat or pressure is applied to waste expanded polystyrene to reduce the volume thereof, thereby forming an ingot. The ingot is then introduced again into an extruder, extruded in the form of strands, and cut to prepare pellets having a predetermined size of about 3 mm. In this process, an antioxidant is mixed in an amount of 0.001 to 1% based on the total weight, thereby removing radicals generated during the extrusion process using heat and preventing degradation.

### 3) Micro-Seeding Step Through Pulverization

For pulverizing waste expanded polystyrene pellets (Φ = 3 mm) to manufacture waste expanded polystyrene micro seeds (Φ < 1 mm), strand cutting, underwater cutting, a grinder, a ball mill, a bead mill, a refiner, a vibration mill, a homomixer, or the like may be used. Conventionally, in a waste expanded polystyrene recycling process, the process has been carried out and applied only up to the pelletization process, as shown in FIG. 2(a). However, in the present invention, the particle size is reduced compared to conventional pellets (Φ = 3 mm) to Φ < 1 mm, thereby enabling manufacture of recycled expandable polystyrene particles (Φ = 0.4 to 1.7 mm) that can be easily foam-molded.

The present invention can prevent a decrease in molecular weight and improve long-term stability by adding, to the waste expanded polystyrene pellets manufactured in the preceding step, 0.001 to 1 wt% of a secondary antioxidant (a sulfur-based or phosphorus-based antioxidant) based on the total weight.

In summary, in the volume-reduction/pelletization step for reducing the volume of waste expanded polystyrene, heat or pressure, typically heat at or above the glass transition temperature (Tg), is applied to waste expanded polystyrene foam to remove pores and thereby reduce the volume thereof. During this process, a decrease in the molecular weight of polystyrene occurs due to degradation of the polystyrene. In addition, the ingot formed through the volume-reduction process is again subjected to heat at or above the glass transition temperature (Tg), melt-extruded, and then pelletized. In general, when the molecular weight decreases due to degradation of a polymer, mechanical strength decreases, and therefore such pellets exhibit deterioration in physical properties compared to virgin polystyrene.

In addition, in the micro-seeding process in which heat at or above the glass transition temperature (Tg) is again applied to the pellets to melt the pellets, a decrease in the molecular weight of polystyrene occurs again.

In order to prevent such a decrease in molecular weight, the present invention is characterized in that an antioxidant is added to at least one of the volume-reduction/pelletization step and the micro-seeding step.

More specifically, in the volume-reduction/pelletization step, a primary antioxidant, such as a phenolic-based or amine-based antioxidant, may be added to remove radicals of polystyrene chains decomposed by heat, thereby preventing a decrease in molecular weight. Thereafter, in the step for micro-seeding, a secondary antioxidant, such as a sulfur-based or phosphorus-based antioxidant, may be added together with the waste expanded polystyrene pellets manufactured by the above process to suppress generation of peroxide, thereby preventing a decrease in molecular weight and improving long-term stability. However, it is not necessarily required to separately add the primary antioxidant and the secondary antioxidant alone, and it is also possible to apply a mixture of the primary antioxidant and the secondary antioxidant in order to more reliably prevent a decrease in molecular weight.

The primary antioxidant may be selected from phenolic compounds such as 2,6-di-tert-butyl-4-methylphenol, styrenated phenol, n-octadecyl 3-(3,5-di-tert-butyl-4-hydroxyphenyl)propionate, and 2,2'-methylenebis(4-methyl-6-tert-butylphenol), and amine compounds such as phenyl-α-naphthylamine, phenyl-β-naphthylamine, and N,N'-diphenyl-p-phenylenediamine.

The secondary antioxidant may be selected from phosphorus-based compounds such as tris(2,4-di-tert-butylphenyl) phosphite, bis(2,4-di-tert-butylphenyl) pentaerythritol diphosphite, and bis(2,4-dicumylphenyl) pentaerythritol diphosphate, and sulfur-based compounds such as dilauryl thiodipropionate, distearyl thiodipropionate, and ditridecyl thiodipropionate.

For reference, a decrease in molecular weight due to degradation of a polymer begins with an oxidation reaction in which hydrogen bonds in polymer chains are decomposed by externally applied heat to form radicals. This oxidation reaction is initiated as hydrogen is removed from a polymer resin (R-H) to generate alkyl radicals (R·), and then proceeds to a propagation reaction in which peroxides are formed and radicals are generated at an accelerated rate by heat, ultraviolet rays, or the like, thereby rapidly decreasing molecular weight. Therefore, in order to prevent degradation during volume reduction and micro-seeding of a polymer, formation of radicals should be suppressed.

Accordingly, when an antioxidant is added during the manufacturing process, degradation of the polymer can be prevented, thereby preventing a decrease in the molecular weight of the micro seeds. In addition, when expandable polystyrene is manufactured by synthesizing waste expanded polystyrene micro seed particles with virgin styrene monomer, excellent cushioning performance can be secured.

### 4) Manufacture of Recycled Expandable Polystyrene Micro Particles

The manufactured recycled expandable polystyrene micro seeds and virgin styrene monomer may be mixed in a reactor to manufacture recycled expandable polystyrene particles through suspension polymerization. More specifically, the suspension polymerization may include dispersing the micro seeds, which serve as cores, in a solvent together with an inorganic surfactant, a suspending agent, a dispersant, an emulsifier, and the like; and coating the seeds with a monomer and polymerizing the monomer through a styrene-based monomer, an initiator, an organic surfactant, and the like, thereby growing the seeds.

Thereafter, the method may include impregnating the generated core-shell polystyrene particles with a blowing agent under high-temperature and high-pressure conditions; and adding a stabilizer, a reaction terminator, and the like, followed by washing, to obtain polystyrene impregnated with the blowing agent.

As the blowing agent, n-pentane, cyclopentane, isopentane, and the like may be used, but the blowing agent is not necessarily limited thereto. The blowing agent may be included in an amount of 1 to 10 wt%, preferably 3 to 8 wt%, based on the manufactured expandable polystyrene (EPS) particles.

After the expandable polystyrene (EPS) particles are manufactured, pre-expansion is performed under appropriate steam pressure conditions to expand the particles 20 to 80 times. Thereafter, beads suitable for a desired density are injected into a molding die having a predetermined shape, and expansion and molding are performed under appropriate steam pressure conditions to manufacture expanded polystyrene, that is, a molded article.

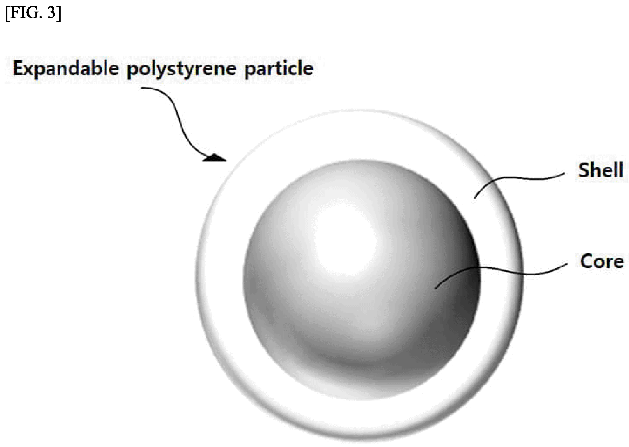

For reference, the expandable polystyrene particles having a core-shell structure according to the present invention have a structure as shown in FIG. 3. The expandable polystyrene particles are formed to include a core, which is a recycled expandable polystyrene micro seed, and a virgin polystyrene shell coating the core, and the density of the core is greater than the density of the shell. Preferably, the density of the core may be 1.2 to 2.0 times the density of the shell. When the core/shell density ratio is less than 1.2, the difference in expansion between the core and the shell is not large, and thus spaces between particles may be largely formed during expansion. When the core/shell density ratio exceeds 2.0, expansion of the core portion may hardly proceed due to the high density of the core portion, and thus the overall foamability of the beads may be deteriorated.

In the expandable polystyrene particles having a core-shell structure according to the present invention, the core has a higher density than the shell, and thus the shell, which has a relatively low density, is over-expanded until it contacts adjacent particles. As a result, a foam having irregular expanded particles having a substantially polygonal shape is formed. Accordingly, gaps between the respective irregular particles are reduced, and spaces through which moisture can penetrate during a water-cooling process in the expansion/molding process are reduced, thereby providing an effect of reducing moisture content. Due to the moisture content reduction effect according to the present invention, the moisture content, that is, the residual moisture content, may be 5% or less, and more preferably 3.5% or less.

On the other hand, in the case of conventional expandable polystyrene particles having a single circular shape, the entirety of each particle has the same density. Therefore, when the particles are expanded by introducing a blowing agent, spherical expansion occurs, thereby increasing gaps between the particles. As a result, moisture penetrates during a water-cooling process in the expansion/molding process, thereby increasing the moisture content.

### [Examples]

### 1. Example: Manufacture of Recycled Expanded Polystyrene Prepared by Adding an Antioxidant

### (1) Manufacture of Recycled Expandable Polystyrene Micro Seeds

During the volume-reduction treatment of the collected waste expanded polystyrene foam under conditions of a temperature of 90 to 150°C and a pressure of 10 to 25 kg/cm², 0.1 wt% of a primary antioxidant [tetrakis[methylene-3-(3,5-di-tert-butyl-4-hydroxyphenyl)propionate]methane, SONGNOX 1010, Songwon Industrial Co., Ltd.] based on the total weight of the final polystyrene was added to prepare an ingot. The ingot was then introduced again into an extruder, extruded in the form of strands, cut, and pulverized to prepare primary pellets having a diameter and length of about 3 mm.

Thereafter, during an additional extrusion process for seeding, in which the die hole size was 1 mm or less, 0.1 wt% of a secondary antioxidant [tris(2,4-di-tert-butylphenyl) phosphite, SONGNOX 1680, Songwon Industrial Co., Ltd.] based on the total weight of the final polystyrene was added, thereby manufacturing recycled expandable polystyrene micro seeds having a diameter and length of about 0.85 mm.

### (2) Manufacture of Recycled Expandable Polystyrene Particles

1.14 kg of distilled water (DI water), 0.66 kg of the manufactured recycled expandable polystyrene core seeds, 7.2 g of tricalcium phosphate, and 0.054 g of sodium dodecylbenzenesulfonate were introduced into a main reactor and heated to 75°C while being stirred. 120 g of styrene monomer, 240 g of distilled water, 0.78 g of polyvinylpyrrolidone, 0.12 g of azobisisobutyronitrile, and 1.74 g of benzoyl peroxide were added to an auxiliary reactor and stirred at 6,000 rpm for 5 minutes to uniformly disperse the styrene monomer. Thereafter, the styrene monomer emulsion prepared in the auxiliary reactor was continuously introduced into the main reactor at a rate of 3 g/min. Subsequently, 1.32 g of trimagnesium phosphate and 0.03 g of sodium dodecylbenzenesulfonate were additionally introduced into the main reactor, and the temperature was raised to 115°C and maintained for 2 hours, thereby manufacturing final recycled expandable polystyrene (EPS) particles having a core-shell structure.

### (3) Manufacture of Recycled Expanded Polystyrene

336 g of isopentane and n-pentane, as blowing agents, was introduced into the main reactor and impregnated under pressure at 12 kgf/cm² in a nitrogen atmosphere for 10 hours. After the impregnation was completed, the temperature of the main reactor was cooled to room temperature of 25 to 30°C, and the recycled expandable styrene bead particles impregnated with the blowing agents were taken out, dehydrated, and dried.

Thereafter, the manufactured recycled expandable styrene bead particles were pre-expanded at an expansion ratio of 50 ml/g, aged in a silo under room-temperature conditions for 15 to 18 hours, and then molded using an expanded styrene resin molding machine at a steam pressure of 2 kgf/cm², thereby manufacturing recycled expanded polystyrene having a density of 20 g/L.

### 2. Comparative Example: Manufacture of Recycled Expanded Polystyrene Prepared Without Adding an Antioxidant

Recycled expanded polystyrene was manufactured in the same manner as in the above Example, except that no antioxidant was added during the process of manufacturing the recycled expandable polystyrene micro seeds.

### 3. Experimental Evaluation: Comparison of Cushioning Performance of Recycled Expanded Polystyrene

In order to compare the cushioning performance of the recycled expanded polystyrene of the Example according to the present invention and that of the Comparative Example, experiments on compressive stress and flexural fracture load were conducted under the following conditions, and the results are shown in Table 1.
∘ Measurement Equipment
   - Molecular weight: THF-GPC
   - Cushioning performance: UTM (Yeonjin S-Tech Co., Ltd.)
∘ Cushioning Performance Test Conditions
   - Molecular weight: Shodex HK-G + 2 x TSKgel Supermultipore HZ-M + TSKgel SuperHZ-2500 columns, temperature: 40°C, flow rate: 0.35 mL/min, injection volume: 20 µL (concentration: 3 g/L)
   - Cushioning performance: KS M3808 standard

**[Table 1]**

| Classification | Molecular Weight | Foam Density (g/L) | Cushioning Performance | |
|---|---|---|---|---|
| | | | Compressive Stress (N/cm²) | Flexural Fracture Load (N) |
| Comparative Example | 13.7 | 20 | 17.6 | 24 |
| Example | 15.4 | 20 | 20.5 | 34 |

As shown in Table 1, in the case of the recycled expanded polystyrene of the Comparative Example to which no antioxidant was added, the average molecular weight was 150,000 or less, and the flexural fracture load of the recycled expanded polystyrene having a foam density of 20 g/L was 25 N or less. In contrast, in the case of the Example according to the present invention, the average molecular weight was 150,000 or more, and the flexural fracture load of the recycled expanded polystyrene was excellent at 30 N or more.

Although the embodiments of the present invention have been described in detail above, the scope of the present invention is not limited thereto, and it will be apparent to those skilled in the art that various modifications and variations can be made without departing from the technical spirit of the present invention described in the claims.

## Claims

1. A method for manufacturing recycled polystyrene micro seeds, the method comprising:
a volume-reduction/pelletization step of preparing pellets by extruding an ingot manufactured after a volume-reduction treatment in which heat or pressure is applied to recycled polystyrene foam to reduce a volume thereof; and
a micro-seeding step of preparing micro seeds by applying heat to the prepared pellets and cutting and pulverizing the pellets,
wherein an antioxidant is added to at least one of the volume-reduction/pelletization step and the micro-seeding step.

2. The method for manufacturing recycled polystyrene micro seeds according to claim 1,
wherein the antioxidant is a primary antioxidant comprising a phenolic-based or amine-based compound, or a secondary antioxidant comprising a sulfur-based or phosphorus-based compound.

3. The method for manufacturing recycled polystyrene micro seeds according to claim 1,
wherein the antioxidant added during the volume-reduction/pelletization step comprises at least a primary antioxidant for removing radicals of polystyrene chains to prevent a decrease in molecular weight.

4. The method for manufacturing recycled polystyrene micro seeds according to claim 1,
wherein the antioxidant added during the micro-seeding step comprises at least a secondary antioxidant for suppressing generation of peroxide to prevent a decrease in molecular weight.

5. The method for manufacturing recycled polystyrene micro seeds according to claim 1,
wherein the antioxidant is included in an amount of 0.001 to 1 wt% based on a total mass of the manufactured micro seeds.

6. Recycled polystyrene micro seeds manufactured by the method according to claim 1,
wherein the recycled polystyrene micro seeds comprise an antioxidant and have a weight-average molecular weight (Mw) of 150,000 to 300,000.

7. An expanded polystyrene foam formed by expanding polystyrene particles having a core-shell structure, the polystyrene particles being manufactured by subjecting the recycled polystyrene micro seeds manufactured according to claim 1 and a styrene monomer to suspension polymerization.

8. The expanded polystyrene foam according to claim 7,
wherein the recycled polystyrene micro seeds forming a core of the polystyrene particles have a weight-average molecular weight (Mw) of 150,000 to 300,000.

9. The expanded polystyrene foam according to claim 7,
wherein the density of the core of the polystyrene particles is greater than the density of a shell thereof.

10. The expanded polystyrene foam according to claim 8,
wherein the density of the core is 1.2 to 2.0 times the density of the shell.

11. The expanded polystyrene foam according to claim 7,
wherein the expanded polystyrene foam has a moisture content of 5% or less.
